# EUROPÄISCHE PATENTANMELDUNG

(11) **EP 2 194 341 A2**
(43) Veröffentlichungstag der Anmeldung: **09.06.2010**
(21) Anmeldenummer: 09177946.2
(22) Anmeldetag: 03.12.2009
(51) Int. Cl.: F24J 2/52, E04D 3/36

(54) **Modulverriegelung**

(30) Priorität: 05.12.2008 DE 102008044380; 10.06.2009 DE 102009025947; 01.07.2009 DE 102009026083
(71) Anmelder: Climasol-Solaranlagen GmbH, 89073 Ulm (DE)
(72) Erfinder: Lutz, Stefan, 89075 Ulm (DE)
(74) Vertreter: Lermer, Christoph

(57) **Zusammenfassung**

Ein Befestigungssystem 1 weist mehrere parallel zueinander angeordnete Modulprofile 20 auf. Die Modulprofile 20 umfassen eine Profilschiene 21 und sich unten beidseitig seitlich von der Profilschiene 21 erstreckende Flansche 22. Die Flansche 22 bzw. die Unterseite des Modulprofils 20 liegen auf einer Holzbohle 30 auf und sind mittels Befestigungsschrauben 4 befestigt. Das Befestigungssystem 1 weist zudem Aufnahmeelemente 50 auf, die an den Modulprofilen 20 angeordnet sind. Es können mehrere Aufnahmeelemente 50 parallel auf eine Profilschiene 21 aufgeclipst werden. Außerdem weist das Aufnahmeelement 50 beidseitig Aufnahmen 52, 53 mit jeweils einem Aufnahmeraum 57 zum Einbringen des Randsbereichs eines Solarmoduls (nicht dargestellt) auf.

## Beschreibung

### TECHNISCHES GEBIET

Die vorliegende Erfindung betrifft ein System zur Befestigung eines Solarmoduls, umfassend: Ein erstes Trägerelement zur Befestigung am Untergrund; und ein zweites Trägerelement zur Befestigung am Untergrund, wobei das erste Trägerelement beabstandet vom zweiten Trägerelement angeordnet ist. Außerdem betrifft die Erfindung ein Verfahren zur Befestigung eines Solarmoduls, insbesondere mittels eines genannten Systems, umfassend die Schritte: a) Einführen eines ersten Endabschnitts eines Solarmoduls in eine Aufnahme eines Aufnahmeelements; und b) Einführen eines zweiten Endabschnitts des Solarmoduls in eine zweite Aufnahme eines zweiten Aufnahmeelements.

### STAND DER TECHNIK

Der Einsatz von Solarmodulen zur Stromerzeugung hat im Angesicht steigender Energiepreise und knapper werdender nicht erneuerbarer Ressourcen an Bedeutung gewonnen. Um Solarmodule wirtschaftlich rentabel zu betreiben, wurden erhebliche Anstrengungen unternommen, die Rentabilität der Herstellung und den Wirkungsgrad der Module zu verbessern.

Für einen wirtschaftlichen Einsatz ist es jedoch erforderlich, dass Solarmodule mit möglichst geringem technischem Aufwand an geeigneten Stellen aufgebaut und dort effektiv genutzt werden können. Bekanntermaßen werden Solarmodule häufig an Dächern angebracht, da dort die Sonneneinstrahlung ungehindert auf die Solarzelle auftreffen kann.

Allerdings hat es sich gezeigt, dass, je größer und empfindlicher die Solarmodule werden, beispielsweise Glaslaminate ohne Rahmen, sich die Montage desto schwieriger durchführen lässt. Insbesondere wird durch die Größe und Empfindlichkeit der Module die Handhabung erschwert. So müssen bei den meisten Befestigungssystemen mehrere Personen an der Montage eines Moduls mitwirken, beispielsweise muss eine Person das Modul halten, während die andere dieses fixiert. Außerdem besteht bei einigen Befestigungssystemen das Risiko, die Solarmodule bei der Montage zu beschädigen. Außerdem ist ein Glasbruch, beispielsweise durch eine Längenänderung der Halterungen aufgrund von Temperaturschwankungen, bei einer Reihe von Systemen nicht ausgeschlossen.

### AUFGABE DER ERFINDUNG

Ausgehend davon besteht die Aufgabe der vorliegenden Erfindung darin, ein System und ein Verfahren zur Befestigung von Solarmodulen vorzuschlagen, die eine einfache Handhabung während der Montage gewährleisten.

### TECHNISCHE LÖSUNG

Diese Aufgabe wird gelöst durch ein System zur Befestigung von Solarmodulen nach Anspruch 1, und ein Verfahren zur Befestigung von Solarmodulen nach Anspruch 15. Vorteilhafte Ausführungsformen der Erfindung ergeben sich aus den Merkmalen der abhängigen Ansprüche.

Ein erfindungsgemäßes System zur Befestigung eines Solarmoduls oder Verbindungsstücks umfasst: ein erstes Trägerelement zur Befestigung am Untergrund bzw. einer Unterkonstruktion; ein zweites Trägerelement zur Befestigung am Untergrund bzw. an einer Unterkonstruktion, wobei das erste Trägerelement beabstandet vom zweiten Trägerelement angeordnet ist; ein erstes Aufnahmeelement, das am ersten Trägerelement angeordnet ist und eine Aufnahme zur Aufnahme eines ersten Endabschnitts des Solarmoduls bzw. Verbindungsstücks aufweist; ein zweites Aufnahmeelement, das am zweiten Trägerelement angeordnet ist und eine Aufnahme zur Aufnahme eines zweiten Endabschnitts des Solarmoduls bzw. Verbindungsstücks aufweist, wobei wenigstens eines der Aufnahmeelemente ein Verriegelungselement aufweist, das das Solarmodul bzw. Verbindungsstück in dem ersten Aufnahmeelement und dem zweiten Aufnahmeelement fixiert.

Statt des Solarmoduls kann auch auf gleiche Weise (auch wenn dies im Folgenden nicht an allen Stellen explizit beschrieben ist) ein Verbindungsstück in den Aufnahmeelementen bzw. Aufnahmen gehalten werden. Das Verbindungsstück kann beispielsweise ein Gleitschuh oder ein Adapter sein, aber auch eine Modulschiene/ein Modulprofil, an denen die Solarmodule unmittelbar oder mittelbar befestigt werden. Die Verbindungsstücke müssen dabei so ausgebildet sein, dass sie (meist gegenüber liegende) Endabschnitte aufweisen, die in die Halterungen eingeführt werden können. Die Endabschnitte können beispielsweise flache Stege sein, die in einer Kante abschließen. Die Dicke der Stege muss an die Halterungen angepasst sein.

Mit Hilfe des Systems können Solarmodule oder Verbindungsstücke an verschiedenen Konstruktionen, beispielsweise an Flachdächern, Schrägdächern, auf ebenem, geneigtem und/oder flachem Untergrund angebracht werden.

Bei Verwendung eines Gleitschuhs kann das Trägerelement beispielsweise als eine Modulschiene ausgebildet sein, die bewegbar im Gleitschuh angeordnet ist. An der Modulschiene sind die Solarmodule in der erfindungsgemäßen Art und Weise befestigt.

Die Handhabung ist dabei besonders einfach, da die Aufnahmen vorzugsweise U-förmig ausgebildet sein können. Damit kann zunächst eine Kante des Solarmoduls in die erste U-förmige Aufnahme bzw. in die ersten U-förmigen Aufnahmen eines bzw. mehrerer erster Aufnahmeelemente, die entlang der ersten Modulschiene (Trägerelement) angeordnet sind, eingeführt werden. Vorzugsweise sollte dies die höher gelegene Modulschiene sein. Anschließend wird die gegenüberliegende Kante vor die Öffnung einer zweiten U-förmigen Aufnahme bzw. mehrerer zweiter U-förmiger Aufnahmen eines bzw. mehrerer nebeneinander entlang der zweiten Modulschiene (Trägerelement) angeordneter zweiter Aufnahmeelemente gebracht und anschließend in den U-förmigen Aufnahmeraum eingeschoben. Im nächsten Schritt wird in dem durch die Verschiebung entstandenen Zwischenraum zwischen der ersten Kante des Solarmoduls und der hinteren Begrenzung der ersten U-förmigen Aufnahme(n) ein Verriegelungselement, beispielsweise aus Gummi, eingebracht, um das Modul in den ersten und zweiten Aufnahmen zu fixieren. Die Schenkel der U-förmigen ersten und zweiten

Aufnahmen sind dabei so konzipiert, dass das Modul auf den unteren Schenkeln aufliegt, jedoch wenigstens am oberen Schenkel der zweiten U-förmigen Aufnahme(n) vorbei geschwenkt werden kann, sobald die erste Kante des Moduls genügend weit in die erste(n) U-förmige(n) Aufnahme(n) eingeschoben ist. Im verriegelten Zustand sind die oberen Schenkel der U-förmigen Aufnahmen so konzipiert, dass das Modul in den Aufnahmeelementen fixiert ist. Die Montage dieser Module ist dementsprechend einfach und auch durch eine Person zu bewerkstelligen. Trotz des einfachen Befestigungsprinzips ergibt sich ein sicherer Halt der Solarmodule.

Die Öffnungen der U-förmigen ersten Aufnahme und der gegenüber liegenden zweiten Aufnahme weisen aufeinander zu, so dass das Modul horizontal (z.B. auf einem Flachdach)), geneigt (z.B. auf einem Schrägdach) oder vertikal (z.B. an einer Fassade) ausgerichtet und fixiert werden kann.

Die Aufnahme des ersten Aufnahmeelements und/oder des zweiten Aufnahmeelements kann wenigstens eine Basis und zwei Schenkel aufweisen, die einen Aufnahmeraum zur Aufnahme eines Endabschnitts des Solarmoduls ausbilden.

Die Aufnahme des ersten Aufnahmeelements und/oder des zweiten Aufnahmeelements kann im Wesentlichen U-förmig ausgebildet sein.

Das erste Aufnahmeelement und/oder das zweite Aufnahmeelement kann eine Breite aufweisen, die wesentlich kleiner ist als die Länge der Kante des in der entsprechenden Aufnahme aufgenommenen Endabschnitts des Solarmoduls.

Das erste Aufnahmeelement und/oder das zweite Aufnahmeelement weist insbesondere eine Breite derart auf, dass entlang einer Kante des Solarmoduls zwei oder mehrere Aufnahmeelemente anordenbar sind.

An zwei gegenüberliegenden Endkanten des Solarmoduls können insbesondere jeweils zwei oder mehrere Aufnahmeelemente angeordnet sein.

Die Aufnahmeelemente können punktförmige Auflagen für das Solarmodul bilden. Durch die Ausbildung und Auslegung der Breite der Aufnahmeelemente (die Breite entspricht in diesem Fall der Ausdehnung in Längsrichtung der Trägerelemente) wird eine praktisch punktförmige Lagerung der Solarmodule an mehreren Stellen, beispielsweise an je zwei Punkten pro Seite, realisiert. Punktförmig bedeutet in diesem Zusammenhang, dass das Verhältnis der Länge der Kante des Solarmoduls zur entsprechenden Ausdehnung (Breite) der Auflage der Aufnahme sehr klein ist. So könnte mit einer einzigen Aufnahme pro Seite das Solarmodul nicht sicher gehalten werden.

Das erste Aufnahmeelement und/oder das zweite Aufnahmeelement können wenigstens zwei entgegengesetzt ausgerichtete Aufnahmen aufweisen. Der Begriff "entgegengesetzt ausgerichtet" bedeutet in diesem Fall, dass die Öffnungen der Aufnahmen in entgegengesetzte Richtung weisen. Auf diese Weise kann ein Aufnahmeelement in der ersten Aufnahme den Randbereich eines ersten Solarmoduls aufnehmen, in der zweiten Aufnahme den Randbereich eines zweiten, benachbart angeordneten Solarmoduls.

Das Verriegelungselement kann in der ersten Aufnahme und/oder in der zweiten Aufnahme angeordnet sein.

Das Verriegelungselement kann insbesondere zwischen der Basis wenigstens einer der Aufnahmen und einer Endkante des Solarmoduls angeordnet sein.

Vorzugsweise sind das erste Trägerelement und das zweite Trägerelement parallel zueinander angeordnet. Der Abstand der Trägerelemente entspricht im Wesentlichen der Länge eines Solarmoduls.

Das erste Trägerelement und/oder das zweite Trägerelement können als Modulprofile ausgebildet sein, an denen jeweils das erste Aufnahmeelement bzw. das zweite Aufnahmeelement befestigt ist.

Das erste Trägerelement und/oder das zweite Trägerelement können in einer besonders bevorzugten Ausführungsform wenigstens in einer Längsrichtung bewegbar bzw. verschiebbar am Untergrund bzw. der Unterkonstruktion angeordnet sein.

Das System kann wenigstens einen Gleitschuh aufweisen, in dem das erste Trägerelement und/oder das zweite Trägerelement bewegbar aufgenommen sind. Der Gleitschuh kann wenigstens eine Gleitführung aufweisen. Das erste Trägerelement und/oder das zweite Trägerelement weisen vorzugsweise ein Profil auf, das mit dem Gleitschuh in Eingriff steht.

Das erste Trägerelement und/oder das zweite Trägerelement können auch ein Profil aufweisen, das mit Hilfe von Befestigungsmitteln am Untergrund befestigbar ist. Beispielsweise können sie ein T-Profil aufweisen (um 180° gedreht, auf dem Kopf stehend), so dass das Trägerelement eine langgestreckte Schiene und seitliche davon angeordnete Seitenflansche aufweist. Über die Seitenflansche kann das Trägerelement beispielsweise an einer Bohle befestigt werden.

In einer besonders bevorzugten Ausführungsform weisen das erste Trägerelement und/oder das zweite Trägerelement einen Wasserkanal auf, so dass Stauwasser längs des Trägerelements abfließen kann.

Eine erfindungsgemäße Anordnung umfasst wenigstens ein System wie oben beschrieben, und wenigstens ein Solarmodul, das mittels des Systems zwischen dem ersten Trägerelement und dem zweiten Trägerelement befestigt ist.

Die Anordnung weist vorzugsweise ein drittes Trägerelement auf, das parallel zum ersten Trägerelement und zum zweiten Trägerelement angeordnet ist, und ein zweites Solarmodul, das benachbart zum ersten Solarmodul zwischen dem zweiten Trägerelement und dem dritten Trägerelement befestigt ist.

Das erste Solarmodul wird vorzugsweise wenigstens von einem ersten Aufnahmeelement gehalten wird, und das zweite Solarmodul wenigstens von dem ersten Aufnahmeelement gehalten. Das erste Aufnahmeelement weist dazu zwei Aufnahmen auf, deren Öffnungen entgegengesetzt ausgerichtet sind, um jeweils die Kante eines der Module aufzunehmen. Sowohl das erste Solarmodul als auch das zweite Solarmodul sind an wenigstens einer der entgegen gerichteten Aufnahmen eines Aufnahmeelements befestigt. Auf diese Weise kann ein Aufnahmeelement stets zur Befestigung zweier Solarmodule verwendet werden, die beidseitig am entsprechenden Trägerelement angeordnet sind.

Das erste Trägerelement und/oder das zweite Trägerelement und/oder das dritte Trägerelement können an wenigstens einem Unterträger befestigt sein. Der Unterträger kann wenigstens eine, vorzugsweise mehrere parallel angeordnete Bohlen umfassen. Die Bohlen sind vorzugsweise im Wesentlichen parallel zueinander ausgerichtet. Insbesondere sind die Bohlen im Wesentlichen senkrecht zur Ausrichtung der Trägerelemente angeordnet.

Ein erfindungsgemäßes Verfahren zur Montage eines Solarmoduls, insbesondere mittels eines Systems wie oben beschrieben umfasst folgende Schritte: a) Einführen eines ersten Endabschnitts eines Solarmoduls in eine Aufnahme eines Aufnahmeelements; b) Einführen eines zweiten Endabschnitts des Solarmoduls in eine zweite Aufnahme eines zweiten Aufnahmeelements; und c)Verriegelung des Solarmoduls im ersten Aufnahmeelement und im zweiten Aufnahmeelement durch Einbringen eines Verriegelungselements zwischen einer Endkante des Solarmoduls und einem Anschlag der ersten Aufnahme und/oder der zweiten Aufnahme.

Der Verfahrensschritt b) umfasst insbesondere eine Anordnung des zweiten Endabschnitts des Solarmoduls vor einem Aufnahmeraum der zweiten Aufnahme und ein Einschieben des Endabschnitts des Solarmoduls in den Aufnahmeraum der zweiten Aufnahme. Der zweite Endabschnitt wird dazu am oberen Schenkel der zweiten Aufnahme vorbei in Richtung des unteren Schenkels verschwenkt und dann eingeschoben.

### KURZE BESCHREIBUNG DER FIGUREN

Weitere Merkmale und Vorteile der Erfindung werden aus der nachfolgenden Beschreibung bevorzugter Ausführungsbeispiele anhand der Figuren deutlich. Es zeigen:
- Figur 1: eine perspektivische Ansicht eines erfindungsgemäßen Befestigungssystem;
- Figur 2: eine Draufsicht auf eine Solarmodulanordnung gemäß der Erfindung;
- Figur 3: die Anordnung eines erfindungsgemäßen Befestigungssystems an einem Schrägdach;
- Figur 4: eine Anordnung eines Solarmoduls mit Hilfe des erfindungsgemäßen Befestigungssystems;
- Figur 5: eine erste Aufnahme gemäß der Erfindung;
- Figur 6: eine zweite Aufnahme gemäß der Erfindung;
- Figur 7: eine seitliche Schnittansicht eines Befestigungssystems gemäß der Erfindung;
- Figur 8: eine seitliche Schnittansicht einer Modulschienenanordnung gemäß der Erfindung;
- Figur 9: eine Draufsicht auf die Modulschienenanordnung der Figur 7;
- Figur 10: eine Draufsicht auf eine Solarmodulanordnung gemäß der Erfindung;
- Figur 11: ein Beispiel für eine Modulschiene mit Modulklammern;
- Figur 12: eine detaillierte Ansicht einer erfindungsgemäßen Modulschiene und einer erfindungsgemäßen Modulklammer;
- Figur 13: eine weitere detaillierte Ansicht einer erfindungsgemäßen Modulschiene und einer erfindungsgemäßen Modulklammer;
- Figur 14: eine erfindungsgemäße Modulschiene mit einer daran befestigten erfindungsgemäßen Modulklammer;
- Figur 15: eine erste Ausführungsform eines erfindungsgemäßen Klammerprofils;
- Figur 16: das Klammerprofil aus der Figur 15 mit einem Klemmadapter;
- Figur 17: eine zweite Ausführungsform eines erfindungsgemäßen Klammerprofils;
- Figur 18: eine dritte Ausführungsform eines erfindungsgemäßen Klammerprofils;
- Figur 19: eine vierte Ausführungsform eines erfindungsgemäßen Klammerprofils; und
- Figur 20: einen Aufbau mit dem erfindungsgemäßen Klammerprofil.

### DETAILLIERTE BESCHREIBUNG BEVORZUGTER AUSFÜHRUNGSBEISPIELE

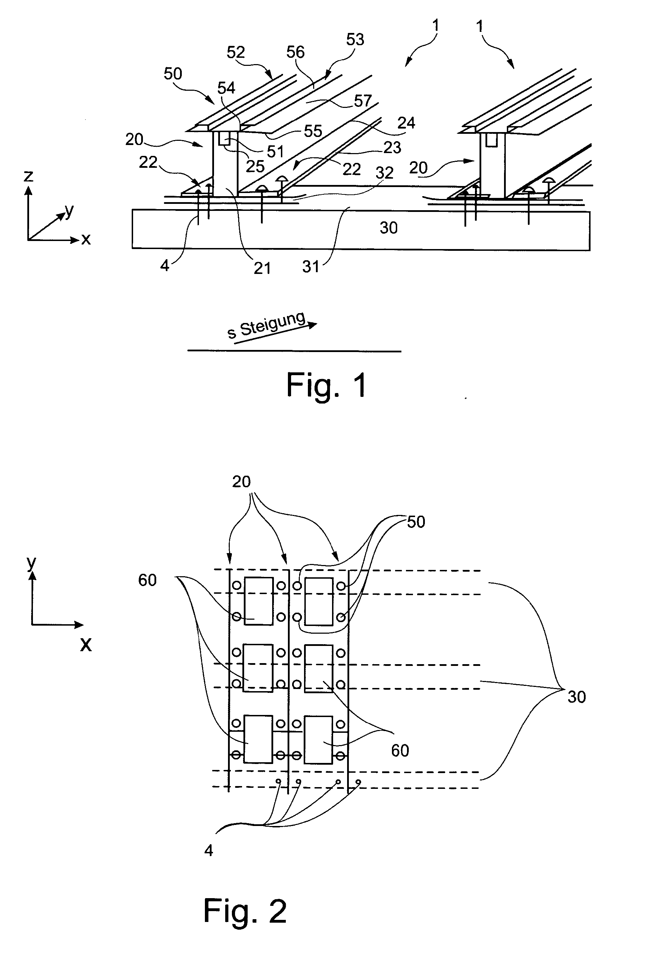

Die Figur 1 zeigt ein erstes Ausführungsbeispiel eines Befestigungssystems 1 gemäß der vorliegenden Erfindung.

Das Befestigungssystem 1 weist zwei (oder mehrere nicht dargestellte) parallel zueinander angeordnete Modulprofile 20 auf. Die Modulprofile 20 umfassen eine Profilschiene 21 und sich unten beidseitig seitlich (+/- x-Richtung) von der Profilschiene 21 erstreckende Flansche 22. Wenigstens einer der Flansche 22, in der Regel der an einem Schrägdach nach oben (in x-Richtung) ausgerichtete Flansch 22 kann derart ausgebildet sein, dass zwischen einer äußeren Erhöhung 23 und der Profilschiene 21 eine Wasserrinne 24 gebildet ist. Auf der Oberseite weist die Profilschiene 23 eine sich in y-Richtung erstreckende Vertiefung 25 auf.

Die Flansche 22 bzw. die Unterseite des Modulprofils 20 liegen auf einem Unterträger, beispielsweise einer Holzbohle 30, auf und sind mittels Befestigungsschrauben 4 an der Holzbohle 30 befestigt. Zwischen der Unterseite des Modulprofils 20 und der Holzbohle 30 kann eine Dachfolie 31 und evtl. eine zusätzliche Dichtung 32 zwischen der Dachfolie 31 und der Unterseite des Modulprofils 20 angeordnet sein. Die Holzbohle 30 kann in die Folie 31 eingeschweißt sein. Zwischen Modulprofil 20 und der Holzbohlenbefestigung kann optional noch eine weitere Dichtungsmanschette eingelegt sein. Ebenso können die Modulprofile 20 zusätzlich zur Befestigung mittels der Befestigungsschrauben 4 geklebt werden.

Das Befestigungssystem 1 weist zudem Aufnahmeelemente 50 auf, die an den Modulprofilen 20 angeordnet sind. Ein Aufnahmeelement 50 weist hierzu einen nach unten gerichteten Vorsprung 51 auf, der komplementär zur Vertiefung 25 des Modulprofils 20 ausgebildet und in diese einsteckbar ist. Die Vertiefung kann ein Gewinde umfassen. Statt des Vorsprungs kann eine Schraube vorgesehen und die Halterung 50 mit dem Modulprofil verschraubt werden.

Es können mehrere Aufnahmeelemente 50 parallel auf eine Profilschiene 21 aufgeclipst werden. Außerdem weist das Aufnahmeelement 50 beidseitig Aufnahmen 52, 53 auf, die jeweils eine Basis 54, einen unteren Schenkel 55 und einen oberen Schenkel 56 aufweisen, die einen Aufnahmeraum 57 zum Einbringen des Randsbereichs eines Solarmoduls (nicht dargestellt) ausbilden.

In der Figur 2 ist eine Draufsicht auf eine erfindungsgemäße Solarmodulanordnung dargestellt. Die Anordnung ist an einer in x-Richtung ansteigenden Konstruktion angeordnet. Die Anordnung weist mehrere parallel angeordnete Holzbohlen 30 auf, die entlang der x-Richtung ausgerichtet sind.

Senkrecht zu den Holzbohle 30 sind Modulprofile 20 entsprechend der Ausführungsform gemäß der Figur 1 in y-Richtung angeordnet. Die Modulprofile 20 sind durch Befestigungsmittel 4, beispielsweise durch Schrauben, jeweils beidseitig der Profilschienen 21 (vgl. Figur 1) an den Holzbohlen 30 befestigt. Die Modulprofile 20 sind durchgehend ausgebildet.

Zwischen den Modulprofilen 20 sind einzelne Solarmodule 60, beispielsweise Dünnschichtsolarmodule, an jeweils vier Aufnahmeelementen 50 befestigt. Jedes Aufnahmeelement 50 (vgl. Figur 1) kann dabei jeweils die Endkanten zweier in x-Richtung benachbart angeordneter Solarmodule 60 aufnehmen.

Aus der Figur 2 wird deutlich, dass die Breite (y-Richtung) der Aufnahmeelemente 50 klein ist gegenüber der Breite der durch die Aufnahmeelemente 50 gehaltenen Modulschienen 60. Auf diese Weise wird eine praktisch punktförmige Halterung jedes Solarmoduls 60 an vier (4) Stellen realisiert. Jedes der Module liegt an vier Punkten auf. Beispielsweise können die Aufnahmeelemente 50 eine Länge von nur wenigen cm haben, während die Solarmodule 60 eine Breite von ca. 1 Meter oder mehr aufweisen.

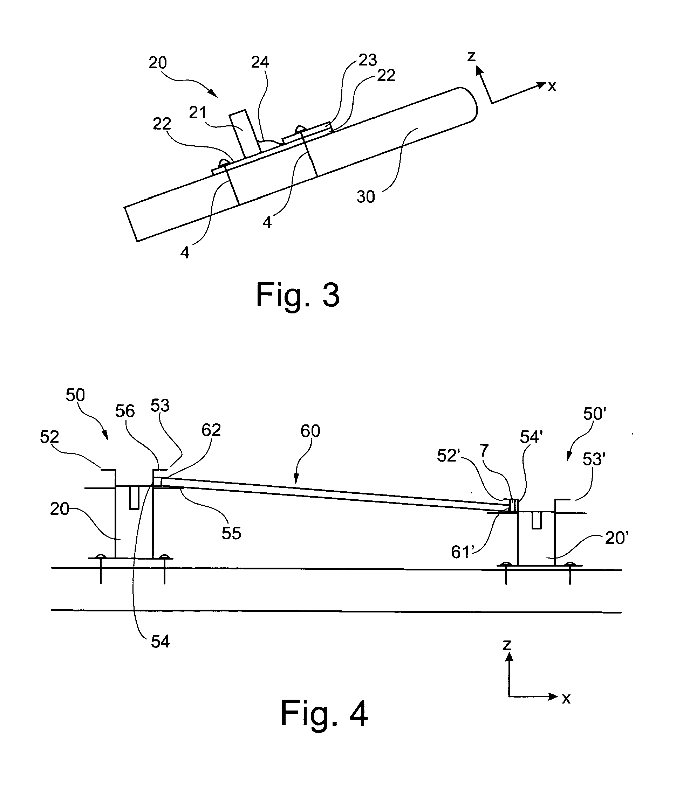

Die Figur 3 zeigt eine Anordnung eines Modulprofils 20 gemäß der Erfindung an einem geneigten Unterträger 30. Entsprechend der Figur 1 sind seitliche Flansche 22 des Modulprofils 20 mit Hilfe von Befestigungsmitteln 4 an der Holzbohle 30 befestigt. Zumindest der oben angeordnete der Seitenflansch 22 ist mit einer Erhöhung 23 versehen, die gemeinsam mit der Profilschiene 21 eine Wasserrinne 24 begrenzt. Die Wasserrinne 24 verhindert ein Eindringen von Wasser, insbesondere von Stauwasser, das sich durch Wasseranstauung an der Profiloberseite der Profilschiene 21 sammelt, zum Einschraubloch der Befestigungsschraube 4.

Die Figur 4 verdeutlicht das Einlegen eines Solarmoduls 60 zwischen zwei parallel angeordneten Modulprofile 20, 20'. Auf den Modulprofilen 20, 20' ist jeweils ein Aufnahmeelement 50, 50' befestigt. Jedes Aufnahmeelement 50, 50' weist eine erste obere Aufnahme 52, 52' und eine zweite untere Aufnahme 53, 53' auf. Wegen der Anordnung des Systems im vorliegenden Ausführungsbeispiel an einem Schrägdach mit einer Steigung in x-Richtung ist die erste Aufnahme 52', die dem höher gelegenen Modulprofil 20 zugeordnet ist, für das Solarmodul 60 eine obere Aufnahme 52' und die zweite, dem weiter unten angeordneten Modulprofil 20 zugeordnete Aufnahme 53, eine untere Aufnahme 53.

Zunächst wird die obere Kante 61 des Moduls 60 in die Aufnahmeöffnung 57' (vgl. auch Fig. 1) des oberen Profils 52' (bzw. in die Aufnahmeöffnungen mehrere oberer Aufnahmeelemente 50') eingesetzt und in Richtung der Basis 54' der Aufnahme 52' geschoben.

Anschließend wird die untere Kante 62 des Moduls 60 am freien Ende des oberen Schenkels 56 der unteren Aufnahme 53 vorbei bis zum unteren Schenkel 55 der unteren Aufnahme 53 geführt. Das System ist dabei durch eine Verkürzung des oberen Schenkels gegenüber dem unteren Schenkel der unteren Aufnahme 53 so ausgelegt, dass das Vorbeiführen der unteren Kante 62 des Moduls 60 möglich ist, wenn die obere Kante 61 des Moduls 60 in Richtung der Basis 54' der oberen Aufnahme 52' geschoben ist.

Anschließend wird der untere Randbereich des Moduls 60 zwischen den oberen Schenkel 56 und den unteren Schenkel 55 der unteren Aufnahme 53 eingeschoben bzw. bewegt sich durch die Schwerkraft in Richtung der Basis 54 der unteren Aufnahme 53, die einen Anschlag bildet.

Zur Arretierung wird in den frei gewordenen Raum zwischen der Oberkante 61 des Moduls 60 und der Basis 54' der oberen Aufnahme 52' eine Arretierung 7, beispielsweise ein Gummielement, eingeführt. Das Arretierelement 7 verriegelt das Modul 60 in dem Befestigungssystem 1 und verhindert insbesondere ein Abheben des Moduls 60 von den Modulprofilen 20, 20'. Dadurch ist das Modul 60 in den sich gegenüberliegenden Aufnahmen 53, 52' zweier benachbarter Aufnahmeelemente 50, 50' sicher fixiert.

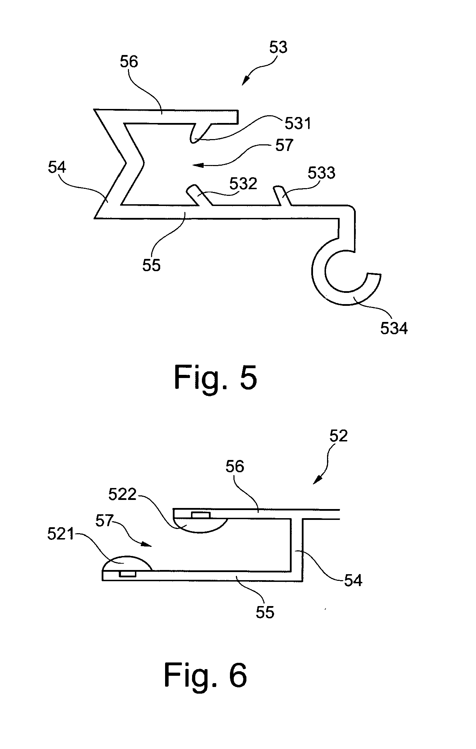

In der Figur 5 ist beispielhaft eine untere Aufnahme 53 eines Aufnahmeelements 50 dargestellt. Die untere Aufnahme 53 weist eine Basis 54, einen sich senkrecht davon erstreckenden unteren Schenkel 55 und einen sich senkrecht davon erstreckenden oberen Schenkel 56 auf. Diese Elemente begrenzen einen Aufnahmeraum 57 zur Aufnahme eines Randbereichs eines Solarmoduls.

Außerdem weist die Aufnahme 53 sich von den Schenkeln 55 und 56 in den Aufnahmeraum 57 erstreckende und schräg in Richtung der Basis 54 gerichtete, abgeklappte Zähne 531, 532 und 533 auf. Zudem ist eine Kabelschlaufe 534 vorgesehen, die als Kabelhalterung für die Modulkabel dient.

Die untere Aufnahme besteht im Wesentlichen aus einem U-Profil mit Kabelschlaufe. Die Kabelschlaufe sichert die definierte Kabelhalterung der Modulkabel und verhindert ein Scheuern der Kabel an scharfen Kanten und Profilen und den Kontakt mit der Dachfolie. Dadurch werden chemische Reaktionen zwischen den Kabeln und der Dachfolie verhindert. Die Figur 6 zeigt eine obere Aufnahme 52 mit einer Basis 54, einem unteren Schenkel 55 und einem oberen Schenkel 56. Am freien Ende des unteren Schenkels 55 ist ein erster Kompressionsgummi 521 angeordnet, im Bereich des freien Endes des oberen Schenkels 56 ein zweiter Kompressionsgummi 522. Das Modul kann in einfacher Weise in den Bereich 57 zwischen den Schenkeln 55 und 56 eingeführt werden. Die obere Aufnahme 52 ist so konzipiert, dass das Solarmodul stets in Kontakt mit einem oberen Gummielement 522 und einem unteren Gummielement 521 steht.

Im Bereich des Anschlags der unteren und/oder der oberen Aufnahme 52, 53 können geeignete Auflageelemente oder Pufferelemente aus Gummi angeordnet werden, um eine Beschädigung der Kante des Solarmoduls zu verhindern.

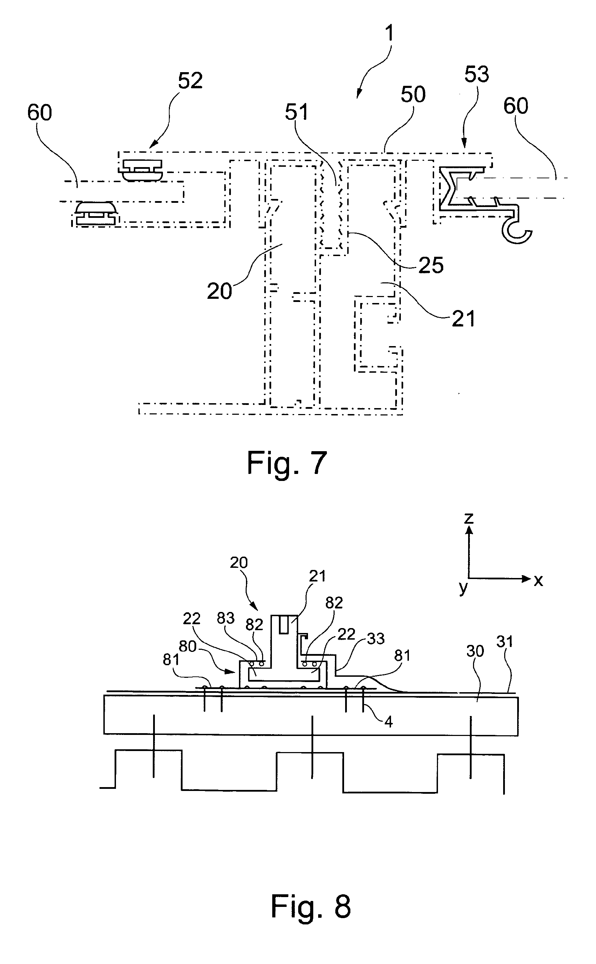

Die Figur 7 zeigt eine seitliche Schnittansicht eines erfindungsgemäßen Befestigungssystems 1 mit Aufnahmen 52 und 53 wie in den vorherigen Figuren 5 bzw. 6 beschrieben. Das Aufnahmeelement 50 ist auf die Profilschiene 21 des Modulprofils 20 aufgeclipst.

Die Figur 8 zeigt ein weiteres Ausführungsbeispiel eines erfindungsgemäßen Modulprofils 20. Dieses weist eine Profilschiene 21 auf, von deren unteren Ende sich senkrecht beidseitig Führungsflansche 22 erstrecken. Anders als bei den bisherigen Ausführungsbeispielen ist das Modulprofil 20 nicht über die Seitenflansche 22 direkt mit dem Unterträger 30 verbunden. Vielmehr weist das Befestigungssystem 1 einen Gleitschuh 80 auf, der die Seitenflansche 22 des Modulprofils 20 durch die Vorsprünge 83 klammerartig umgreift und das Modulprofil 20 so vor einem Abheben vom Gleitschuh 80 stabilisiert.

Der Gleitschuh 80 weist sich lateral beidseitig erstreckende Seitenflansche 81 auf, die mittels Befestigungsschrauben 4 an der Holzbohle 30 befestigt sind. Die Seitenflansche 81 liegen auf Folie 31 auf, die die Holzbohle 30 umschließt. Eine weitere Folie 33 kann sich über die Seitenflansche 81 erstrecken und so ein Eindringen von Feuchtigkeit in den Bereich der Befestigungsschrauben 4 verhindern.

Innerhalb des Gleitschuhs 80 sind Gleitführungen 82 angeordnet, die ein Gleiten des Modulprofils 20 in Längsrichtung (y-Richtung) der Modulschiene 23 ermöglichen. Die Modulschiene 23 kann sich somit kontrolliert in y-Richtung im Gleitschuh 80 bewegen. Die Modulprofile 20 werden an einem definierten Fixpunkt befestigt und können sich so einseitig oder zweiseitig relativ zum Fixpunkt ausdehnen. Die Gleitmechanik für Solarmodule dient zur kontrollierten Längenausdehnung bei Glaslaminaten, insbesondere bei Solarmodulen ohne Rahmen, und beim Einsatz relativ langer Modulschienen. Auf diese Weise wird verhindert, dass unkontrollierte Längenausdehnungen beispielsweise aufgrund von Temperaturschwankungen, in den Aufnahmen 52, 53 angeordnete Auflagegummis seitlich aus diesen herausschieben. Außerdem wird die Gefahr des Glasbruchs verhindert.

Im Rahmen der Montage kann der Gleitschuh 80 separat auf die Holzbohle 30 angeschraubt werden. Anschließend werden die Modulprofile 20 eingeführt. Die Modulprofile 20 können jedoch auch bereits vor der Montage des Gleitschuhs 80 in diesen eingeführt worden sein.

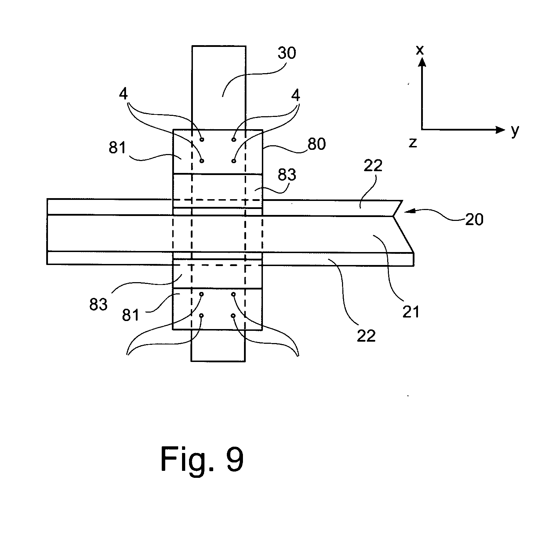

Die Figur 9 zeigt die Ausführungsform der Figur 8 in einer Draufsicht. Der Gleitschuh 80 befindet sich im Bereich einer Holzbohle 30 und ist mittels Befestigungsschrauben 4 über die beiden Seitenflansche 81 beidseitig mit der Holzbohle 30 verschraubt.

Im Gleitschuh 80 ist ein Modulprofil 20 mit einer Profilschiene 21 und Seitenflanschen 22 in y-Richtung bewegbar angeordnet. Ein Abheben des Modulprofils 20 wird durch ein Übergreifen der Seitenflansche 22 durch Vorsprünge 83 des Gleitschuhs 80 verhindert, während das obere Ende der Modulschiene 23 aus der zwischen den Enden der Haltevorsprünge 83 begrenzten Öffnung herausragt.

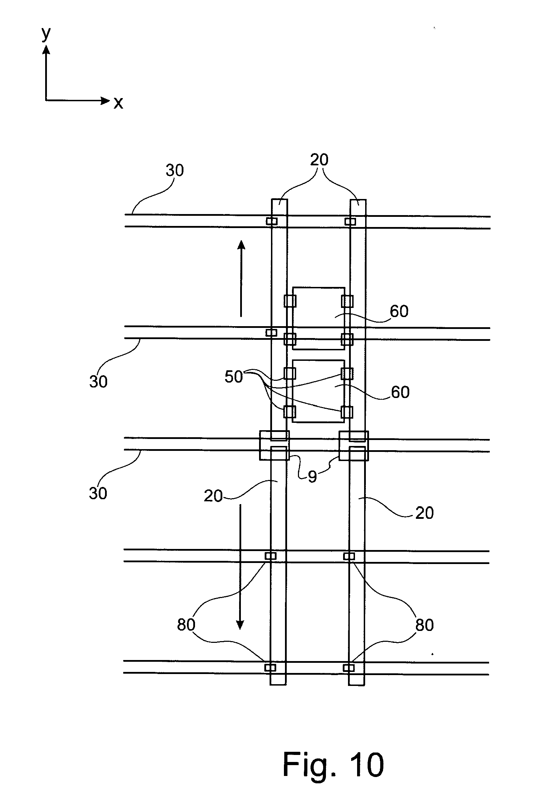

In der Figur 10 ist eine erfindungsgemäße Modulanordnung dargestellt. Die Module 60 sind mit jeweils vier Aufnahmeelementen 50 pro Modul an parallel zueinander angeordneten Modulprofilen 20 befestigt. Die Modulprofile 20 sind senkrecht zu parallel zueinander angeordneten Bohlen 30 ausgerichtet.

Zur bewegbaren Halterung der Modulprofile 20 sind jeweils Aufnahmeelemente 50, wie in den Figuren 8 und 9 dargestellt, vorgesehen. Im dargestellten Ausführungsbeispiel sind die Modulprofile 20 an Fixpunkten 9 fest angeordnet, so dass sie sich in einer Richtung vom Fixpunkt aus ausdehnen können.

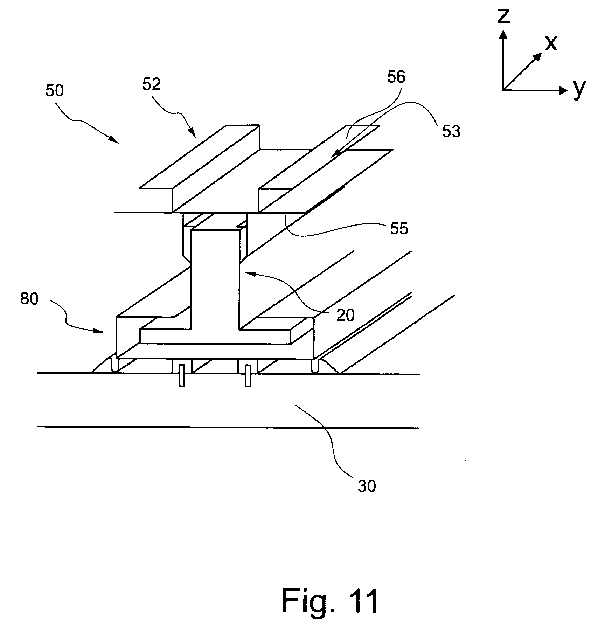

In der Figur 11 ist ein Beispiel für einen Gleitschuh 80 mit einer daran angeordneten Modulschiene 20 dargestellt. An der Modulschiene 20 sind Modulhalterungen 50 aufgeclipst. Wahlweise können die Klammern 50 zusätzlich verschraubt werden. Die Modulhalterungen 50 können jedoch, insbesondere ohne zusätzliche Befestigung, einfach angebracht und entlang der Längsachse der Modulschiene 20 in den Clipsrillen verschoben werden. Dadurch wird Montagezeit eingespart.

Die Solarmodule werden in den Zwischenraum zwischen den Schenkeln 55 und 56 der Modulklammer 52 oder 53 eingeführt und in y-Richtung fixiert, so dass sie fest in der Klammer 52 bzw. 53 gehalten werden. Der Modulclip 52 bzw. 53 kann eine nur kurze Länge (x-Richtung) von ca. 80 mm aufweisen, so dass zwei oder mehrere Modulclips 50, die entlang der Modulschiene 40 angeordnet sind, eine Kante eines Solarmoduls praktisch in Form punktförmiger Auflagen halten. Dadurch wird ein Entlüften der warmen Luft, die sich unter den Solarmodulen staut, nach außen ermöglicht.

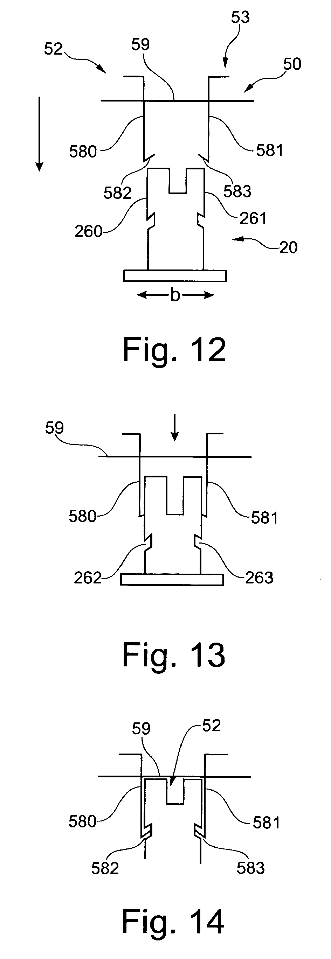

Die Figur 12 zeigt eine detaillierte Ansicht einer erfindungsgemäßen Modulschiene 20 und einer Modulhalterung 50. Die Modulhalterung 50 weist beidseitig Modulklammern 52 und 53 auf.

Außerdem weist die Modulhalterung zwei Schenkel 580, 581 auf, die sich von einer Basis 59 senkrecht nach unten erstrecken. Die Schenkel 580, 581 sind beabstandet zueinander angeordnet. Der Abstand entspricht im Wesentlichen der Breite b der Modulschiene 20. Die Schenkel 580, 581 sind bis zu einem gewissen Grad elastisch ausgebildet, so dass die nach Innen vorstehenden Nasen 582, 583, wie in der Figur 13 dargestellt, bei Ausübung eines Drucks von oben auf die Basis 59 entlang der Seitewände 260, 261 der Modulschiene 20 über die Modulschiene geführt werden können.

In den Seitenwänden 260, 261 der Modulschiene 20 sind Vertiefungen 262, 263 ausgebildet, in die die Nasen 582, 583 der Modulhalterung 50 eingreifen können. Der Eingriff erfolgt dabei, wie in der Figur 14 dargestellt, durch die elastische Rückstellkraft der Schenkel 580, 581. Die Modulhalterung 50 ist in diesem Fall in die Modulschiene 20 eingeclipst bzw. eingerastet. Die Nasen 582, 583 können als schräg zur Basis 59 gerichtete Widerhaken ausgebildet sein, die in entsprechende, komplementär dazu ausgebildete Öffnungen 262, 263 eingreifen. Die Modulhalterung 50 kann somit nur durch ein seitliches Herausdrücken wenigstens eines der Schenkel 580, 581 entrastet und abgenommen werden.

Die Öffnungen 262, 263 der Modulschiene 20 können abschnittsweise oder entlang der gesamten Modulschiene 20 als Rille ausgebildet sein. So kann die Modulhalterung 50 auch im eingeclipsten bzw. eingerasteten Zustand entlang der Längsrichtung der Modulschiene verschoben werden.

Um einen äußerst sicheren Halt der Module, beispielsweise am Dachrandbereich, an dem große Sogkräfte auftreten, zu gewährleisten, kann die Modulhalterung 50 zusätzlich kraftschlüssig mit der Modulschiene 20 verbunden werden, beispielsweise durch eine Schraubverbindung. Die Schraube wird durch eine Öffnung (nicht dargestellt) in der Basis 59 hindurch in eine mit Schraubrillen, einem Schraubengewinde, o. ä. versehenen Schraubkanal (Vertiefung 52) eingeschraubt. Auf diese Weise wird eine besonders sichere Verbindung zwischen der Modulschiene 20 und der Modulhalterung 50 hergestellt.

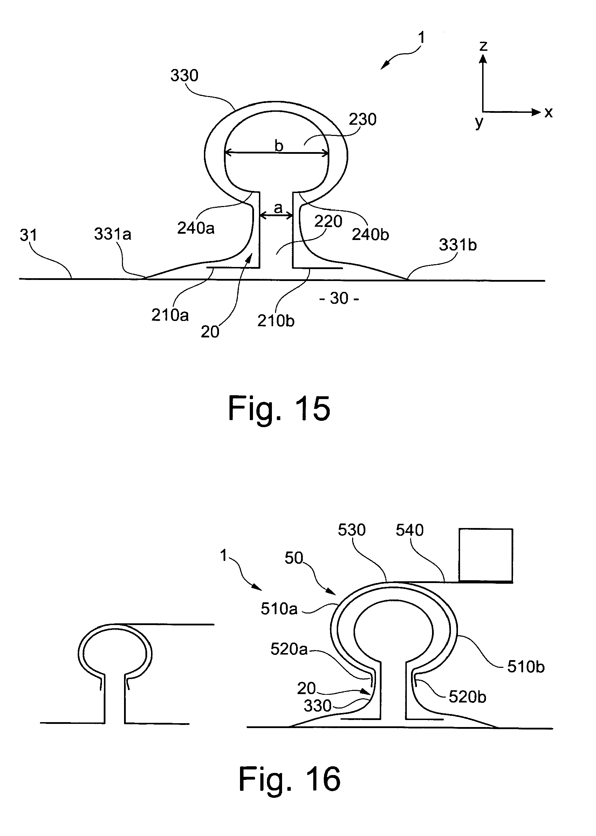

Die Figur 15 zeigt eine Ausführungsform eines weiteren erfindungsgemäßen Befestigungssystems 1 für Solarmodule. Ein Profil 20, das direkt auf einem Dach oder einer sonstigen Unterkonstruktion befestigt werden kann, liegt beispielsweise einer Bohle 30 oder direkt auf einer Dachfolie auf.

Das Profil 20 weist einen speziellen Querschnitt auf. An der Unterseite erstrecken sich seitlich beidseitig in x-Richtung Auflageflansche 210a, 210b. In diesen können Bohrungen (nicht dargestellt) vorgesehen sein, durch die Schrauben (nicht dargestellt) zur Befestigung des Profils 20 an der Unterkonstruktion 30 vorgesehen sind. Nach oben hin (in z-Richtung) erstreckt sich ein Grundkörper 220, der im Wesentlichen eine Breite a aufweist. An der Oberseite geht das Profil in einen Kopfbereich 230 über, der zumindest an einer Stelle eine größere Breite b (in x-Richtung) aufweist als der Grundkörper 220. Der Kopfbereich 230 kann in etwa einen kreisförmigen Querschnitt haben. Der Gesamtquerschnitt des Profils 20 (bzw. des Grundkörper 220 und des Kopfbereichs) kann insgesamt als pilzförmig bezeichnet werden. Der Kopfbereich 230 weist in diesem Ausführungsbeispiel beidseitig Hinterschneidungen 240a, 240b auf. Die Hinterschneidungen weisen jeweils nach unten weisenden Halteflächen 240a, 240b auf.

In diesem Aufbau 1 ist außerdem eine Folie 330 vorgesehen, die seitlich der Befestigungsflansche 210a, 210b des Profils 20 mit der Dachfolie 31 über Schweißnähte 331a, 331b wasserdicht verschweißt ist. Die Folie 330 ist über das Profil 20 geführt, um dieses vollständig und wasserdicht einzuhüllen.

Neben dem Profil 20 weist das System 1, wie in der Figur 16 dargestellt, einen Klemmadapter 50 auf. Dieser ist als Klammer ausgebildet, die um den Kopfbereich 230 des Profils 20 geklemmt werden kann. Der Klemmadapter 50 weist dazu beidseitig jeweils einen Schenkel 510a, 510b auf. Die Schenkel 510a, 510b bilden eine Klammer, die um den Kopfbereich 230 gelegt und formschlüssig mit diesem verbunden werden kann.

Am Scheitel 530 der Klammer ist eine Halterung 540 zum Befestigen von Solarmodulen angeordnet. Die Solarmodule können direkt an der Halterung 540 befestigt werden. Es können jedoch auch weitere Verbindungen vorgesehen sein, beispielsweise ein Gleitschuh oder eine Zwischenverbindung, über die die Solarmodule mittelbar am Adapter 50 angeordnet sind.

Die Klammer bzw. der Adapter 50 kann einteilig ausgebildet und mittels zum Profil 20 hin wirkender elastischer Kräfte mit diesem verbunden sein. Die Klammer wird durch elastische Kräfte bzw. Druckkräfte am Profil 20 gehalten. Die unteren Enden 520a, 520b der Klammer können zum Anbringen und Entfernen des Klemmadapters 50 auseinender gebogen werden. Die Klammer kann beispielsweise aus Federstahl (z.B. V2A) hergestellt sein.

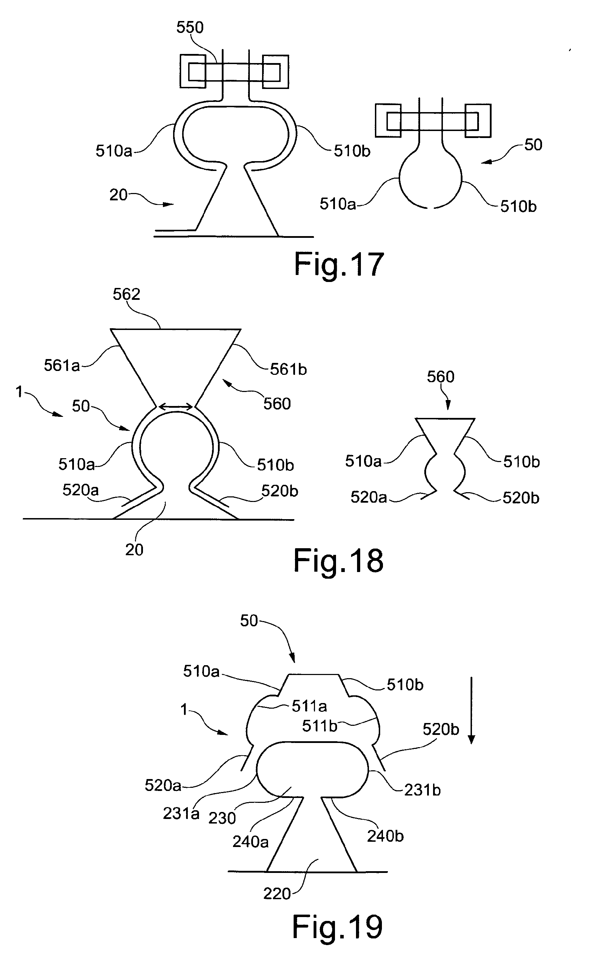

Die Klammer kann jedoch, wie in der Figur 17 dargestellt, auch zweiteilig ausgebildet sein. Die Schenkel 510a und 510b können als separate Bauteile bereitgestellt werden. Sie bestehen beispielsweise aus Stahl und sind lösbar miteinander verbunden. Als Verbindungselement 550 kann beispielsweise ein Bolzen, eine Schraube, etc. verwendet werden. Die Verbindung 550 der Schenkel 510a, 510b kann zum Anbringen und Entfernen des Klemmadapters 50 gelöst werden.

Auf der linken Seite der Figur 17 ist der Adapter 50 am Profil 20 angeordnet, auf der rechten Seite ist der Adapter 50 ohne Profil dargestellt.

Die Figur 18 zeigt ein weiteres Beispiel eines einteiligen Adapters 50. Die Schenkel 510a und 510b sind über eine Komponente 560 miteinander verbunden. Die Komponente 560 verbindet die Schenkel 510a und 510b über zwei seitliche Stege 561a, 561b und einem Brückenteil 562, das die oberen Enden der Stege 561a, 561b verbindet. Die Endbereiche 520a, 520b der Schenkel 510a bzw. 510b ragen schräg vom Profil 20 weg (nach außen) und nach unten.

Die Figur 19 zeigt ein weiteres Ausführungsbeispiel für ein erfindungsgemäßes Befestigungssystem 1.

Das Profil 20 weist einen Querschnitt mit einem Fußteil 220 auf, das sich nach oben hin (z-Richtung) verjüngt. Das Fußteil 220 hat einen im Wesentlichen kegelstumpfförmigen Querschnitt. An die Oberseite des Kegelstumpfs 220 schließt sich das Kopfteil 230 an, das beidseitig seitliche Ausbuchtungen/Vorsprünge 231a, 231b aufweist. Zwischen der Unterseite der seitlichen Ausbuchtungen 231a und 231b sind zwischen dem Fußteil 220 und dem Kopfteil 230 beidseitig Hinterschneidungen bzw. Vertiefungen 240a bzw. 240b gebildet.

Der Adapter 50 weist Schenkel 510a, 510b auf, die komplementär zum äußeren Querschnitt geformt sind. Die Schenkel 510a, 510b weisen jeweils untere Endbereiche auf, die sich entsprechend dem kegelstumpfförmigen Querschnitt des Fußteils 220 an dieses anlegen. Außerdem sind in den Schenkeln 510a, 510b Vertiefungen 511a, 511b vorgesehen, die komplementär zur Form der Ausbuchtungen 231a, 231b ausgebildet sind, um einen festen und sicheren Eingriff der Ausbuchtungen 231a, 231b in die Vertiefungen 511a bzw. 511b zu gewährleisten. Auf diese Weise wird eine sichere formschlüssig Verbindung ermöglicht.

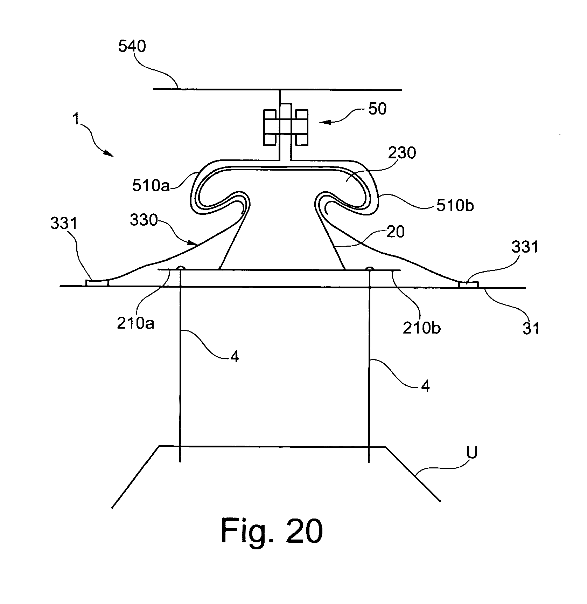

In der Figur 20 ist ein Aufbau mit einem weiteren Klammerprofil dargestellt. Das Befestigungssystem 1 weist ein Profil 20 auf, das mittels Befestigungsschrauben 4 an der Unterkonstruktion U eines Flachdachs befestigt ist. Die zum Durchgriff der Schrauben 4 sind in den Seitenflanschen 210a, 210b des Profils 20 Bohrungen vorgesehen. Die Folie 31 wird von den Schrauben 4 durchdrungen.

Das Profil 20 liegt mit seiner Unterseite auf der Dachfolie 31 auf. Um ein Eindringen von Feuchtigkeit in die Öffnungen zu verhindern wird das Profil 20 von einer weiteren Folie 330 umgeben. Die äußere Oberfläche des Profils 20 (abgesehen von der Unterseite) ist somit von der Folie 330 abgedeckt. Die Folie 330 ist seitlich des Profils 20 mit der Dachfolie 31 verschweißt.

Über die Folie 330 wird ein zweiteiliger Adapter 50 geklemmt. Die Schenkel 510a und 510b hintergreifen das Kopfteil 530 des Profils 20 und bilden somit eine formschlüssige Verbindung zwischen dem Profil 20 und dem Adapter 50.

Der Adapter weist einen Halter 540 auf, an dem ein Solarmodul, ein Gleitschuh, eine Modulschiene oder ein sonstiges Verbindungselement befestigt werden kann.

Durch die formschlüssige Verbindung zwischen dem Profil 20 und dem Adapter 50 wird die Folie 330 nicht verletzt oder durchbrochen. Eine Durchdringung der Folie 330 beispielsweise durch Schrauben/Nieten ist nicht erforderlich. Somit ist die Gefahr, dass Undichtigkeiten entstehen, reduziert.

Sämtliche in den einzelnen Figuren darstellten Merkmale sollen beliebig kombiniert werden können.

Insgesamt bietet das Montagesystem eine sichere und zuverlässige Befestigung von Solarmodulen an einem Dach.

## Patentansprüche

1. System (1) zur Befestigung eines Solarmoduls (60) und /oder eines Verbindungsstücks, umfassend:
ein erstes Trägerelement (20) zur Befestigung am Untergrund bzw. an einer Unterkonstruktion (30);
ein zweites Trägerelement (20') zur Befestigung am Untergrund bzw. an einer Unterkonstruktion (30), wobei das erste Trägerelement (20) beabstandet vom zweiten Trägerelement (20') angeordnet ist;
ein erstes Aufnahmeelement (50), das am ersten Trägerelement (20) angeordnet ist und eine erste Aufnahme (53) zur Aufnahme eines ersten Endabschnitts (62) des Solarmoduls (60) bzw. Verbindungsstücks aufweist;
ein zweites Aufnahmeelement (50'), das am zweiten Trägerelement (20') angeordnet ist und eine zweite Aufnahme (52') zur Aufnahme eines zweiten Endabschnitts (61') des Solarmoduls (60) bzw. Verbindungsstücks aufweist,
**dadurch gekennzeichnet, dass**
wenigstens eines des ersten Aufnahmeelements (50) und des zweiten Aufnahmeelements (50') ein Verriegelungselement (7) aufweist, das das Solarmodul (60) bzw. Verbindungsstück in dem ersten Aufnahmeelement (50) und dem zweiten Aufnahmeelement (50') fixiert.

2. System (1) nach Anspruch 1,
**dadurch gekennzeichnet, dass**
die Aufnahme (53, 52') des ersten Aufnahmeelements (50) und/oder des zweiten Aufnahmeelements (50') wenigstens eine Basis (54) und zwei Schenkel (55, 56) aufweist, die einen Aufnahmeraum (57) zur Aufnahme eines Endabschnitts des Solarmoduls (60) bzw. Verbindungsstücks ausbilden.

3. System (1) nach Anspruch 1 oder 2,
**dadurch gekennzeichnet, dass**
die Aufnahme (53, 52') des ersten Aufnahmeelements (50) und/oder des zweiten Aufnahmeelements (50) im Wesentlichen U-förmig ausgebildet ist bzw. sind.

4. System (1) nach einem der vorhergehenden Ansprüche,
**dadurch gekennzeichnet, dass**
das erste Aufnahmeelement (50) und/oder das zweite Aufnahmeelement (50') eine Breite aufweisen, die wesentlich kleiner ist als die Länge der Kante des in der entsprechenden Aufnahme (52, 53) aufgenommenen Endabschnitts des Solarmoduls (60) bzw. Verbindungsstücks.

5. System (1) nach einem der vorhergehenden Ansprüche,
**dadurch gekennzeichnet, dass**
das erste Aufnahmeelement (50) und/oder das zweite Aufnahmeelement (50') eine Breite derart aufweisen, dass entlang einer Kante des Solarmoduls (60) bzw. Verbindungsstücks zwei oder mehr als zwei Aufnahmeelemente (50) anordenbar sind.

6. System (1) nach einem der vorhergehenden Ansprüche,
**dadurch gekennzeichnet, dass**
an zwei gegenüberliegenden Endkanten des Solarmoduls (60) bzw. Verbindungsstücks jeweils zwei oder mehrere Aufnahmeelemente (50) angeordnet sind.

7. System (1) nach Anspruch 6,
**dadurch gekennzeichnet, dass**
die Aufnahmeelemente (50) punktförmige Auflagen für das Solarmodul (60) bzw. Verbindungsstück bilden.

8. System (1) nach einem der vorhergehenden Ansprüche,
**dadurch gekennzeichnet, dass**
das erste Aufnahmeelement (50) und/oder das zweite Aufnahmeelement (50') jeweils wenigstens zwei entgegengesetzt ausgerichtete Aufnahmen (52, 53) aufweist.

9. System (1) nach einem der vorhergehenden Ansprüche,
**dadurch gekennzeichnet, dass**
das Verriegelungselement (7) in der ersten Aufnahme (52) und/oder in der zweiten Aufnahme (53) angeordnet ist.

10. System (1) nach einem der vorhergehenden Ansprüche,
**dadurch gekennzeichnet, dass**
das Verriegelungselement (7) zwischen der Basis (54) wenigstens einer der Aufnahmen (52, 53) und einer Endkante des Solarmoduls (60) bzw. Verbindungsstücks angeordnet ist.

11. System (1) nach einem der vorhergehenden Ansprüche,
**dadurch gekennzeichnet, dass**
das erste Trägerelement (20) und/oder das zweite Trägerelement (20') als Modulprofile ausgebildet sind, an denen jeweils das erste Aufnahmeelement (50) bzw. das zweite Aufnahmeelement (50') befestigt ist.

12. System (1) nach einem der vorhergehenden Ansprüche,
**dadurch gekennzeichnet, dass**
das erste Trägerelement (20) und/oder das zweite Trägerelement (20') wenigstens in einer Längsrichtung bewegbar bzw. verschiebbar am Untergrund bzw. der Unterkonstruktion (30) angeordnet sind.

13. System (1) nach einem der vorhergehenden Ansprüche,
**dadurch gekennzeichnet, dass**
das System (1) wenigstens einen Gleitschuh aufweist, in dem das erste Trägerelement (20) und/oder das zweite Trägerelement (20') bewegbar aufgenommen ist.

14. System (1) nach Anspruch 13,
**dadurch gekennzeichnet, dass**
das erste Trägerelement (20) und/oder das zweite Trägerelement (20') ein Profil aufweist, das mit dem Gleitschuh (80) in Eingriff steht.

15. Verfahren zur Montage eines Solarmoduls, insbesondere mittels eines Systems gemäß einem der Ansprüche 1 bis 14, umfassend folgende Schritte:
a) Einführen eines ersten Endabschnitts eines Solarmoduls (60) oder Verbindungsstücks in eine Aufnahme (52') eines Aufnahmeelements (50');
b) Einführen eines zweiten Endabschnitts des Solarmoduls (60) bzw. Verbindungsstücks in eine zweite Aufnahme (53) eines zweiten Aufnahmeelements (50); und
c) Verriegelung des Solarmoduls (60) bzw. Verbindungsstücks im ersten Aufnahmeelement (50') und im zweiten Aufnahmeelement (50) durch Einbringen eines Verriegelungselements (7) zwischen einer Endkante des Solarmoduls bzw. Verbindungsstücks und einem Anschlag der ersten Aufnahme (52') und/oder der zweiten Aufnahme (53).
